(19) Europäisches Patentamt / European Patent Office / Office européen des brevets

(11) **EP 3 725 110 B1**

(12) **EUROPEAN PATENT SPECIFICATION**

(45) Date of publication and mention
of the grant of the patent:
**02.03.2022 Bulletin 2022/09**

(21) Application number: **17934695.2**

(22) Date of filing: **11.12.2017**

(51) International Patent Classification (IPC):
*H04W 12/10* (2021.01)    *H04W 4/46* (2018.01)
*H04W 4/12* (2009.01)    *H04L 9/32* (2006.01)
*H04W 12/00* (2021.01)    *H04W 4/021* (2018.01)
*G08G 1/09* (2006.01)

(52) Cooperative Patent Classification (CPC):
**H04W 4/021; G08G 1/092; G08G 1/096741;
G08G 1/096791; H04L 9/3239; H04L 9/3247;
H04L 51/38; H04L 63/123; H04W 4/46;
H04W 12/10;** H04L 12/189; H04L 12/1895;
H04L 51/20; H04L 2209/38; H04L 2209/805;
(Cont.)

(86) International application number:
**PCT/IN2017/050585**

(87) International publication number:
**WO 2019/116377 (20.06.2019 Gazette 2019/25)**

(54) **METHOD AND APPARATUS FOR VALIDATING MESSAGES IN A WIRELESS COMMUNICATIONS NETWORK**

VERFAHREN UND VORRICHTUNG ZUR VALIDIERUNG VON NACHRICHTEN IN DRAHTLOSKOMMUNIKATIONSNETZWERK

PROCÉDÉ ET APPAREIL DE VALIDATION DE MESSAGES DANS UN RÉSEAU DE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.10.2020 Bulletin 2020/43**

(73) Proprietor: **Telefonaktiebolaget LM Ericsson
(publ)
164 83 Stockholm (SE)**

(72) Inventors:
• **BANU, Ruvaitha
Chennai 600034 (IN)**
• **KRISHNAMOORTHY, Amaladhithyan
Chennai 600044 (IN)**

(74) Representative: **Ericsson
Patent Development
Torshamnsgatan 21-23
164 80 Stockholm (SE)**

(56) References cited:
WO-A1-2017/190795     US-A1- 2003 224 793
US-A1- 2009 254 754     US-A1- 2014 357 262
US-B1- 9 432 378

• **Jollen Chen: "Flowchain: A Distributed Ledger
Designed for Peer-to-Peer IoT Networks and
Real-time Data Transactions", , 20 January 2017
(2017-01-20), XP055714788, Retrieved from the
Internet:
URL:https://flowchain.co/Flowchain-WhitePa
per.pdf**
• **LINES 61-67, COLUMN 38; LINES 5-14, 60-67
COLUMN 39; FIGURE 14,**
• **ABSTRACT; PARAGRAPHS [0007]-[0010];
CLAIMS 1, 15,**

(52) Cooperative Patent Classification (CPC): (Cont.)
H04L 2209/84; H04W 4/12

## Description

Technical Field

Embodiments disclosed herein relate to methods and apparatus for determining whether to perform validation of one or more of a pool of un-validated messages, each addressed to one of a plurality of wireless devices in a geographical area associated with a wireless communications network.

Background

With the advent of the Internet of Things (IoT), the automotive world may need to adapt to the IoT market. Connected vehicle technology may therefore evolve to enable a user to share information about, for example, the road conditions, traffic conditions, and information about driverless cars, with users of other vehicles. To do this, connected vehicles may use the cellular network to transmit messages to each other. However, the messages transmitted in the cellular network may be vulnerable to attacks. For example, an attacker may be able to change a message transmitted in the cellular network such that the receiving vehicle receives an entirely different message than the message intended by the sender. In these scenarios, not only can the audio volume be changed, the air conditioning be adjusted, and the windshield wipers turned on, attackers may also gain control over the transmission and crash the vehicle itself. Cyberattacks on autonomous vehicles could put human lives at immediate risk in a way most other hacks do not. It may therefore be advantageous for message transfer between vehicles to be secured for safe travel and communication.

To enhance secured message transfer in an IoT scenario, a distributed ledger system such as Flowchain may used. Flowchain is a distributed ledger system for peer-to-peer networks and real-time data transactions. Flowchain addresses the limitations of a blockchain system for IoT wireless devices. In some examples, Flowchain methodology comprises utilizing a blockchain data structure design for trusted computing to approach the secure data exchange required by the IoT. The blocks in this blockchain data structure may be referred to as Virtual Blocks which contain the validated messages. As more messages are transmitted, more Virtual Blocks may be created and linked to the previous Virtual Block. This chain of Virtual Blocks may then be synced with all of the wireless devices in the network.

Each Virtual Block in the block chain contains a hash of the previous block and its own hash. A new block may be created by taking some un-validated messages from the network, and performing a function which can find the cryptographic hash of the block until the output is below a certain value.

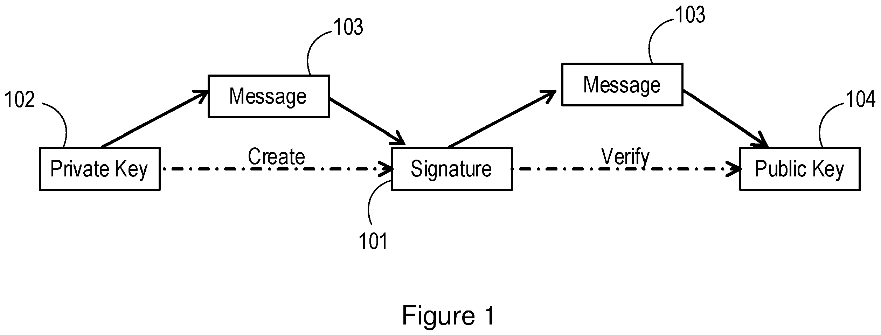

In some examples, messages transmitted in the network may be signed with a digital signature. As illustrated in **Figure 1**, the digital signature 101 may generated using a private key 102 and a message 103 which is being transmitted. Other nodes in the network may use the signature 101 in a different function to verify that the signature 101 corresponds to the public key 104. Since elliptic curve digital signature algorithms and mathematical trap doors may be used for generating the digital signature, the other nodes in the network may be able to verify that the sender owned the private key 102, without actually seeing the private key 102. In other words, a function may be applied to digital signatures constructed using Elliptic curve digital signature or mathematical trap door algorithms along with the original message to confirm whether the message originated from the sender without knowing their private key. If the message was modified in the network it would invalidate the signature constructed from the sender using the original message.

This validation process may be referred to as mining. This process might take few seconds for each message depending on various factors. If this delay happens whilst validating a critical message, it could lead to fatal incidents. The aforementioned Flowchain methodology may therefore lead to problems for connected vehicles where the vehicles may often moving at a high pace, and may therefore require fast validation of crucial messages.

Jollen Chen, "Flowchain: A Distributed Ledger Designed for Peer-to-Peer IoT Networks and Real-time Data Transactions", 20 January 2017, proposes a distributed ledger system called Flowchain for peer-to-peer networks and real-time data transactions.

WO 2017/190795 A1 relates to a method for evaluating at least one telemetry data set, a peer-to-peer application for controlling an evaluation process of at least one telemetry data set and a peer-to-peer module.

US 2009/254754 A1 relates to a system and method for a vehicle-to-vehicle communications system that provide active safety applications employing lightweight geographic authentication using one-time signatures.

Summary

According to the invention there is therefore provided a method in a first wireless device, which is one of a plurality of wireless devices located in a geographical area associated with a wireless communications network, for determining whether to perform validation of one or more of a pool of un-validated messages, each addressed to one of the plurality of wireless devices. The method comprises obtaining respective weightings associated with each of the plurality of wireless devices, wherein a weighting, associated with a wireless device, is representative of a number of un-validated messages the wireless device is able to validate in a unit of time; The method comprises obtaining a zone list wherein the zone list comprises a list of the plurality of wireless devices and the respective weightings associated with the plurality of wireless devices. The method comprise selecting an active list of one or more wireless devices from the plurality of wireless devices by selecting a first number of wireless devices from the zone list associated with the highest weightings such that a count of the pool of un-validated messages at a time, t, divided by a sum of the weightings associated with the first number of wireless devices, is less than or equal to a predetermined maximum time for validating an un-validated message. The method further comprises responsive to the active list comprising the first wireless device, performing validation of the one or more of the pool of un-validated messages.

According to the invention there is provided a first wireless device, which is one of a plurality of wireless devices located in a geographical area associated with a wireless communications network, for determining whether to perform validation of one or more of a pool of un-validated messages, each addressed to one of the plurality of wireless devices. The wireless device comprises an interface; and a processor, wherein the processor is operable to obtain respective weightings associated with each of the plurality of wireless devices, wherein a weighting, associated with a wireless device, is representative of a number of un-validated messages the wireless device is able to validate in a unit of time. The processor is operable to obtain respective weightings associated with each of the plurality of wireless devices, wherein a weighting, associated with a wireless device, is representative of a number of un-validated messages the wireless device is able to validate in a unit of time. The processor is operable to select an active list of one or more wireless devices from the plurality of wireless devices wherein the processor is further operable to select a first number of wireless devices from the zone list associated with the highest weightings such that a count of the pool of un-validated messages at a time, t, divided by a sum of the weightings associated with the first number of wireless devices, is less than or equal to a predetermined maximum time for validating an un-validated message. The processor is further operable to responsive to the active list comprising the first wireless device, perform validation of the one or more of the pool of un-validated messages.

The aforementioned method and apparatus mean that wireless devices which are not suitable for performing validation will not be inadvertently randomly selected to do so, particularly when other wireless devices in the geographical area are more suitable for performing validation. This may greatly increase the probability of successful validation, and may reduce the probability of fatal incidents being caused by excessive delays in validation. Specifically, for implementations in vehicle devices, this may reduce the probability of fatal incidents being caused by excessive delays in validation.

In some embodiments, the first weighting comprises a first component of the first weighting calculated based on static parameters associated with the first wireless device and a second component of the first weighting calculated based on non-static parameters associated with the first wireless device. This allows for the non-static parameters to be repeatedly calculated during operation of the device, whilst the static parameters may be calculated only once at, for example, start-up of the device. This may reduce the processing required at the wireless device.

## Brief Description of the Figures

Figure 1 illustrates generating a digital signature using a private key and a message which is being transmitted;

Figure 2 illustrates how a plurality of wireless devices, which in this example are connected vehicles, may behave when using a Flowchain validation model;

Figure 3 illustrates a method, in a first wireless device for determining whether to perform validation of one or more of a pool of un-validated messages;

Figure 4 illustrates a method, in a first wireless device, for obtaining a respective weighting associated with each of the plurality of wireless devices;

Figure 5 illustrates a geographic range associated with a first wireless device which is operating in a geographic area along with a plurality of other wireless devices, each having their own geographic range;

Figure 6 illustrates a method of generating an active list of wireless devices for performing validation of the pool of un-validated messages;

Figure 7 illustrates a wireless device according to some embodiments;

Figure 8 illustrates a telecommunication network connected via an intermediate network to a host computer in accordance with some embodiments;

Figure 9 illustrates a host computer communicating via a base station with a user equipment over a partially wireless connection in accordance with some embodiments;

Figure 10 illustrates methods implemented in a communication system including a host computer, a base station and a user equipment in accordance with some embodiments;

Figure 11 illustrates methods implemented in a communication system including a host computer, a base station and a user equipment in accordance with some embodiments;

Figure 12 illustrates methods implemented in a communication system including a host computer, a base station and a user equipment in accordance with some embodiments;

Figure 13 illustrates methods implemented in a communication system including a host computer, a base station and a user equipment in accordance with some embodiments.

Description

The following sets forth specific details, such as particular embodiments for purposes of explanation and not limitation. But it will be appreciated by one skilled in the art that other embodiments may be employed apart from these specific details. In some instances, detailed descriptions of well-known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers that are specially adapted to carry out the processing disclosed herein, based on the execution of such programs. Nodes that communicate using the air interface also have suitable radio communications circuitry. Moreover, the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors, one or more processing modules or one or more controllers, and the terms computer, processor, processing module and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

Although the description is given for a wireless device, or user equipment (UE), it should be understood by the skilled in the art that a wireless device is a non-limiting term comprising any mobile or wireless terminal, device or node equipped with a radio interface allowing for at least one of: transmitting signals in uplink (UL) and receiving and/or measuring signals in downlink (DL). A UE herein may comprise a UE (in its general sense) capable of operating or at least performing measurements in one or more frequencies, carrier frequencies, component carriers or frequency bands. It may be a "UE" operating in single- or multi-radio access technology (RAT) or multi-standard mode.

The description involves communication between a wireless device and a radio access network, which typically includes multiple radio access nodes. In the specific example given, the radio access nodes take the form of eNodeBs (eNBs), as defined by 3GPP, or gNodeBs (gNBs) as utilised in the future standards expected to meet the 5G requirements. However, it will be appreciated that the concepts described herein may involve any radio access nodes. Moreover, where the following description refers to steps taken in or by a radio access node, this also includes the possibility that some or all of the processing and/or decision making steps may be performed in a device that is physically separate from the radio antenna of the radio access node, but is logically connected thereto. Thus, where processing and/or decision making is carried out "in the cloud", the relevant processing device is considered to be part of the radio access node for these purposes.

Embodiments disclosed herein relate to communication between a plurality of wireless devices located within a geographical area associated with a wireless communications network. In particular, the embodiments disclosed herein provide methods and apparatus for determining whether a first wireless device should perform validation of one or more of a pool of un-validated messages, each addressed to one of the plurality of wireless devices.

As previously mentioned, a validation process of a pool of un-validated messages may cause some delay in the validated messages reaching their intended recipients. This delay, particularly when considered for wireless vehicle devices, may be extremely undesirable.

For example, consider a vehicle which is travelling at a speed of 1 km per 10 seconds and a message transmitted to the vehicle which instructs the vehicle to "take a left turn in next 1 km". This message goes into an unconfirmed transaction pool which is broadcasted to a plurality of wireless devices within a particular geographical area. The geographical area may also be referred to as a zone. One of the plurality of wireless vehicle devices within the geographical area or zone may validate the message. This validation process may take some time to perform, due to a number of different factors. However, if this validation process takes more than 10 sec in this example, then the vehicle would not be able to respond in time to perform the requested action. Depending on the specific circumstances, this lack of response could be fatal. This problem may be due to the current method selecting random vehicles to perform the validation process. Embodiments herein therefore address the problem of which wireless devices should perform validation.

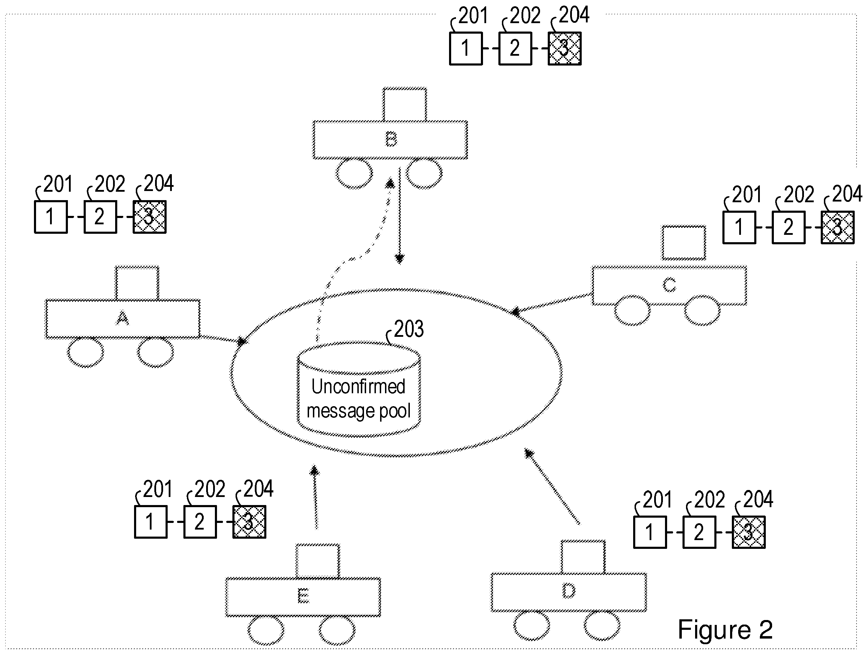

**Figure** 2 illustrates how a plurality of wireless devices, which in this example are connected vehicles, may behave when using a Flowchain validation model.

In this example, five connected vehicles (A, B, C, D, E) are connected using a Flowchain validation model. In this example, the Blocks 201 and 202 represent the messages and/or transactions which have already been validated within the network. Therefore, when a new vehicle, for example, vehicle A, joins the network, it may synchronize all of the messages and transactions in Blocks 201 and 202.

When one vehicle transmits a message addressed to another vehicle, the message may be broadcasted to all of the vehicles within the geographical area which are connected. This allows any one of those vehicles to perform validation of that message. New messages may be added to a pool of un-validated messages 203, to await validation.

Consider, for example, if vehicle A transmits a message to vehicle B. For example, the message may instruct vehicle B to "take a left turn in 1km". This message may be added to the pool of un-validated messages 203. Any randomly selected vehicle from the connected vehicles may then start performing validation to validate the new message. In some examples, the new message may be validated by the randomly selected vehicle along with other un-validated messages. After the validation is complete, the message may be added to the Block chain in validated Block 204. This validated Block 204 may then be broadcast to all vehicles in the network.

This process may continue with randomly selected vehicles taking un-validated messages from the pool of un-validated messages to perform validation.

This validation process may help to defend the transmitted messages from attack. For example, if an attacker attempts to change the original message to "take a left turn in 2 km", the hash of the original message and the hash of the received message will not match and hence changed message will be found to be invalid. Furthermore, if the attacker attempts to change the message in the valid block, this would also fail. This is because the hash of the previous block is copied to the next block and, therefore, if an attacker attempts to change the message, again the hash would not match and the changed message would be found to be invalid.

In order for a changed message to be found to be valid, an attacker may have to change the message in the attacked block and the block that follows it. Since, the blocks are broadcast across all vehicles in the network; the attacker must also do this in all the vehicles across the network.

The validation process may, for example, be a validation process referred to as mining. Mining may be seen as doing the work of finding a nonce so that sha256(sha256(data+nonce))< difficulty. A nonce is an integer number the wireless device performing the validation may choose freely. This selection of the nonce and checking if the condition (< difficulty) is met, comprises the work required to validate the message. The data is a hash over the contents of the block, i.e. the unvalidated messages, and the previous block's hash. sha256() is the SHA-256 cryptographic hashing function.

The Flowchain method may therefore use a probability density function of the normal distribution to determine the mining difficulty. Non-memory hard functions may also be used for hashing as they are suitable for IoT devices with limited computational and memory capacity. DHT (Distributed Hash Table) and Chord Functions may be used which may make the mining process quicker than the traditional blockchain methods, thereby adapting the process for real time IoT applications.

The resulting nonce is the proof of work. Therefore, in order to find a nonce which satisfies the above inequality, the wireless device performing the validation process may try different nonces and calculate the two hash functions. Finding a nonce that satisfies the condition is proof this work of searching and calculating has in fact been done. This process may take between seconds and minutes to complete. It will be appreciated that other methods of performing validation may be used.

In the Flowchain methodology described above, there is currently no control of which wireless device performs the validation process. For generic IoT scenarios, this may not result in any unwanted effects, for example, if all wireless devices are at rest. In these scenarios, it may not be of importance if validation of a message takes some time and the validation is completed a relatively long time after the original message was sent. However, in other implementations, for example, the automotive industry where the vehicles are moving at a fast pace, it may be important that messages are received within a required time, otherwise the delay may result in fatal incidents.

In the example shown in Figure 2, the vehicle chosen to perform validation is chosen at random from the plurality of connected vehicles. In particular, in this example, vehicle B is selected to perform validation. However, vehicle B may have poor network connections and limited hardware, which may increase the time taken to perform validation. In some examples, the time taken for each wireless device to perform the validation process may vary with respect to certain parameters.

For example, the wireless device performing the validation process may require computation power and network resources to perform the validation process within the time required. Since connected vehicles in the future may also be sharing hardware amongst themselves for various reasons, the hardware in vehicles which are not selected for performing validation may be utilized for other purposes. For example, users of vehicles may be able to opt between the manufactures infotainment systems. These systems may be able to sync contacts, music, payment related info etc. These systems may also be used to stream audio or podcasts from the internet. In such instances where a particular vehicle is low on hardware capability, the vehicle may request or share the required hardware with other near-by vehicles. For example Random Access Memory (RAM) may be shared across vehicles, thereby forming a distributed memory-grid. An application requiring more RAM may therefore take advantage of hardware sharing if a particular wireless device does not have the required RAM to perform the application.

Some vehicles, for example, vehicles having powerful Electronic Control Units (ECU) may have high processing power enabling these vehicles to perform validation relatively quickly, for example at a rate of 1 message per second. However, other vehicles may have limited processing power and memory which limits the possible security features that can be implemented on an ECU. Public Key Cryptography is one example of a processing-intensive algorithm which may take a long time to execute.

In embodiments disclosed herein, when a wireless device joins a network certain parameters associated with the wireless device may be registered in the network. An active list of wireless devices may then be created for a particular geographic area associated with a base station. Embodiments disclosed herein may select wireless devices within the geographical area to perform a validation process based on the registered parameters. This, may allow for messages to be validated and received within the time needed for a receiving wireless device to take necessary action. Hence, the probability of the validation process failing or being delayed excessively may fall to near zero.

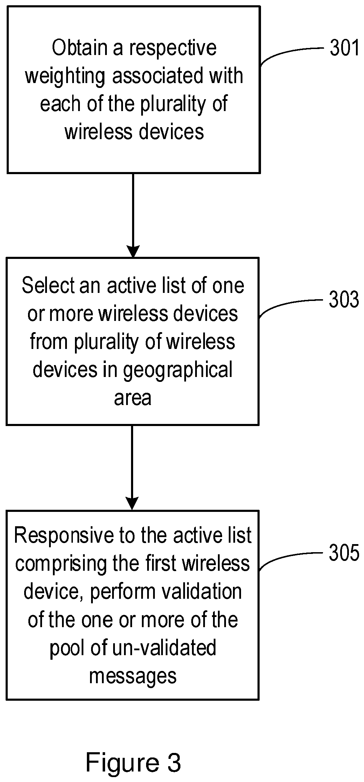

**Figure** 3 illustrates a method, in a first wireless device, which is one of a plurality of wireless devices located in a geographical area associated with a wireless communications network, for determining whether to perform validation of one or more of a pool of un-validated messages, each addressed to one of the plurality of wireless devices. For example, the first wireless device may be any one of the vehicles A to E illustrated in Figure 2. It will be appreciated that the first wireless device may comprise a drone, un-manned tram, or any other suitable wireless device.

In this example, a geographical area may be an area within which a plurality wireless devices are connected. When a wireless device moves from a first geographical area to a second geographical area, it may cease to be connected to the wireless devices in the first geographical area, and may sync with the wireless devices in the second area.

The geographical areas associated with a wireless communications network may be preconfigured by a Service Provider or another 3rd Party. For example, in a city, there can be any number of preconfigured geographical areas. For example, the geographical areas may be arranged based on an expected density of wireless devices within a geographical area. The geographical areas may also be arranged such that all wireless devices within a geographical area are served by the same base station.

In step 301, the first wireless device obtains respective weightings associated with each of the plurality of wireless devices.

In step 303, the first wireless device selects an active list of one or more wireless devices from the plurality of wireless devices, based on the respective weightings associated with each of the plurality of wireless devices. In some examples, the first wireless device may select a number of wireless devices associated with weightings which indicate that they may be suitable for performing validation of un-validated messages.

In step 305, the first wireless device, responsive to the active list comprising the first wireless device, performs validation of the one or more of the pool of un-validated messages.

In other words, the first wireless device obtains information about the other wireless devices in the geographical area, and based on the capabilities of the other wireless devices in the geographical area, determines whether or not it is required to perform validation. This means that wireless devices which are not suitable for performing validation will not be inadvertently randomly selected to do so, particularly when other wireless devices in the geographical area are more suitable for performing validation. This may greatly increase the probability of successful validation, and may reduce the probability of fatal incidents being caused by excessive delays in validation.

Furthermore, the hardware utilization for wireless devices that do not participate in validation may be improved. In some examples, a periodic result of validation attempted by a wireless device may be reported to a wireless device manufacturer, for use in determining the effectiveness of the wireless device in performing validation.

Wireless devices in a geographical area may therefore be associated with a weighting which is representative of a number of un-validated messages the wireless device is able to validate in a unit of time. Each wireless device may determine its own weighting. This may be determined based on a number of parameters. For example, a first component of a weighting may be calculated based on static parameters associated with the wireless device. As these parameters are static, the first component of the weighting may be calculated responsive to a start-up of the wireless device, and may remain constant during operation of the wireless device. For example, the start-up of the wireless device may be a computerised system of the wireless device performing either a hard or soft booting.

For example, the static parameters may comprise one or more of: a computation power of the wireless device, a hardware capacity of the wireless device, a grace period of the wireless device with a mobile operator, and a payment status of the wireless device with the mobile operator. It will be appreciated that other static parameters associated with each wireless device may be taken into consideration.

In some examples, a weighting may also comprise a second component of the weighting calculated based on non-static parameters associated with the wireless device. As these parameters are non-static, the second component of the weighting may be updated repeatedly during operation of the wireless device. In some examples, the second component of the weighting may be updated periodically. In some examples the second component of the weighting may be updated in response to a non-static parameter changing.

For example, the non-static parameters may comprise one or more of: a battery level of the first wireless device, a fuel level of the first wireless device, a signal strength of the first wireless device, a bandwidth of the first wireless device, an engine temperature of the first wireless device; and a speed at which the first wireless device is travelling. It will be appreciated that other non-static parameters associated with each wireless device may be taken into consideration.

A weighting associated with a wireless device may then be calculated by combining the first component of the weighting and the second component of the weighting. For example, the second component of the weighting and the first component of the weighting may be added together, or multiplied together.

A second component of a weighting may, for example, be calculated based on the following four non-static parameters: a coverage zone status, y, which is indicative of whether the wireless device is in a no coverage zone; a signal strength, q; a speed at which the wireless device is travelling, s; and a remaining battery life of the wireless device, b.

Each of the above parameters may be assigned individual factor adjustments. In other words, the affect that each parameter has on the ability of the wireless device to perform validation of messages within a certain time period may be accounted for by assigning the parameter a factor adjustment.

For a wireless device $c_{(i)}$, the second component of the weighting may be calculated by combining the non-static parameters with the factor adjustments as:

$$W_{c(i)} = f(y_i,\ q_i,\ s_i,\ b_i).$$

In other words, the second component of the weighting may be calculated as some function, f, of the aforementioned parameters with their factor adjustments. In some examples, the non-static parameters may be multiplied by their factor adjustments, and summed together.

For example, the following factor adjustments may be made for the four non-static parameters.

For the coverage zone status, y, a factor adjustment of 0.30 may be used as this parameter may play critical role in affecting how may messages the wireless device may validate within a certain time period, and may therefore have higher importance. For example, a wireless device which is about to enter a no coverage zone may have a lower weighting.

For the speed of the wireless device, s, a factor adjustment of 0.30 may be used as this parameter may also have high importance as the speed may be used to determine when a wireless device will enter a particular zone. For example, the distance of the wireless device to a no coverage zone may be received from a Global Positioning Service. The speed of the wireless device may then indicate the time t at which the wireless device will reach the no zone area. Hence when the wireless device is about to reach the no zone area, the weighting for the vehicle may be lower.

For the battery level of the wireless device, b, a factor adjustment of 0.20 may be used. The battery level of a wireless device may be continuously monitored and the remaining battery level taken into account.

For the signal strength, a factor adjustment of 0.20 may be used. With poor signal strength, establishing contact with other wireless devices in the geographical area may become unstable.

For example, if a wireless device is about to enter a no-coverage zone then a weighting assigned to the wireless device may be low due to the high factor assigned to the coverage zone status parameter. Therefore, this wireless device may be less likely to be considered for performing the validation process as it poses a risk of going offline, and validation performed by this wireless device may be more likely to fail or cause excess delay.

In some examples, the value of the weighting for a wireless device may be normalized such that it is representative of a number of of un-validated messages the wireless device is able to validate in a unit of time. For example, if a weighting of 80 is assigned to a wireless device, this may, for example, mean that the wireless device is capable of validating 80 messages a second.

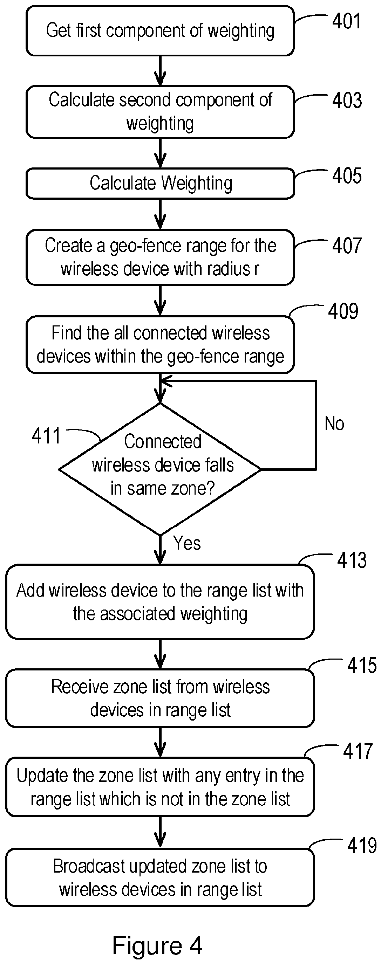

Returning to Figure 3, in step 301 the first wireless device obtains a respective weighting associated with each of the plurality of wireless devices. More specifically, the first wireless device may perform the method as described below with reference to **Figure 4** to obtain a respective weighting associated with each of the plurality of wireless devices.

In step 401, the first wireless device retrieves a first component of the first weighting associated with the first wireless device. As described previously, the first component of the first weighting may be based on static parameters, and may be calculated on start-up of the first wireless device.

In step 403, the first wireless device calculates the second component of the first weighting. As described previously, the second component of the first weighting may be based on non-static parameters, and may be calculated repeatedly during operation of the first wireless device.

In step 405, the first wireless device combines the first and second components of the weighting to obtain the first weighting associated with the first wireless device.

To obtain the respective weightings associated with the other wireless devices of the plurality of wireless devices within the geographic area, the wireless device may obtain a zone list wherein the zone list comprises a list of the plurality of wireless devices and the respective weightings associated with the plurality of wireless devices. For example, in step 407, the first wireless device may create a geographic range around the first wireless device at a radius associated with the first wireless device. This geographic range may be the range at which the first wireless device is capable of communicating with other wireless devices.

In steps 409 and 411, the first wireless device may generate a range list wherein the range list comprises a list of one or more wireless devices, comprising the first wireless device, located within the radius of the first wireless device, and respective weightings associated with each of the one or more wireless devices.

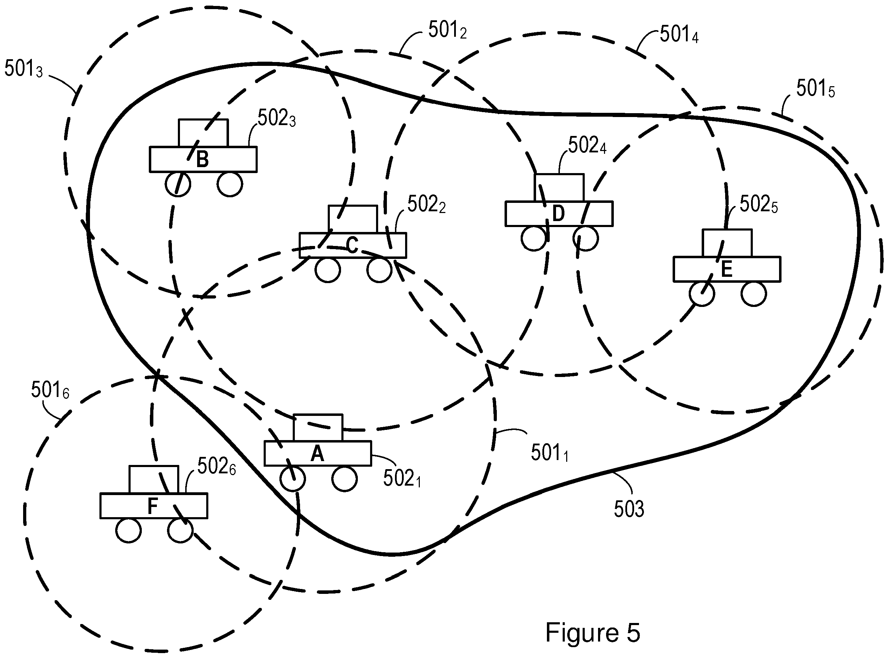

For example, **Figure 5** illustrates a geographic range $501_1$ associated with a first wireless device $502_1$ which is operating in a geographic zone 503 along with a plurality of other wireless devices 502i, each having their own geographic range $501_i$.

For example, in step 409, the first wireless device $502_1$ may find all wireless devices within the geographic range $501_1$. In the example of Figure 5, the wireless devices within the geographic range $501_1$ are wireless devices $502_2$ and $502_6$.

In step 411, the first wireless device $502_1$ may then determine whether each of these wireless devices within the geographic range $501_1$, is also within the geographic area or zone 503. If a wireless device is also within the geographic area 503, it is added to the range list along with its associated weighting, in step 413. If are wireless device is not also within the geographic area, it is not added to the range list.

For the example of Figure 5 therefore, the range list for the first wireless device $501_1$ will comprise the wireless device $502_2$ and its associated weighting, as wireless device $502_2$ is within the geographic area 503. However, the wireless device $502_6$ is not in the range list for the first wireless device $502_1$ as the wireless device $502_6$ is not within the geographic area 503. The first wireless device $501_1$ itself, is also included in the range list along with the weighting calculated in step 405.

For example, the range list for the wireless device $502_1$ may be as follows:

| Vehicle ID | Weighting |
| --- | --- |
| C | 70 |
| A | 80 |

The range list for a vehicle c(i) may therefore be represented as $LC(i) = \{W_{o(c(i))} \ W_{o(c(i+1))}, \ W_{o(c(i+2))},$ $W_{o(c(i+3))}, \ ..., \ W_{o(c(i+n))}\}$, where $W_{o(c(i))}$ is the weighting associated with vehicle c(i), and there are n vehicles within the range.

The first wireless device has therefore generated a range list of the wireless devices which it is able to broadcast information too, which are also within the same geographic area.

The first wireless device may then receive, in step 415, a broadcasted zone list, comprising a list of wireless devices and their associated weightings in the geographic area, from at least one of the wireless devices in the range list. For example, the first wireless device $502_1$ may receive a zone list from the wireless device $502_2$.

In step 417, the first wireless device $502_1$ may update the zone list with any information in the range list which is not already in the zone list. For example, if the first wireless device has just entered the geographic area 503, the zone list may not comprise an information about the first wireless device $502_1$. In another example, if the weighting associated with the first wireless device $502_1$ has changed, the first wireless device may update this information in the zone list. It will be appreciated that all wireless devices in the geographic area 503 which are connected, may update and broadcast the zone list in this way.

The zone list, $L_u$, may therefore comprise the unique values of from each range list of the wireless devices within the geographical area.

In step 419, the first wireless device $502_1$ may then broadcast the updated zone list to the wireless devices in the range list. For example, the wireless device $502_2$ in Figure 5.

In this way, when a new wireless device enters the geographic area, it may generate a range list of all of the wireless devices within a certain radius, which are also within the geographic area. Then, in order to alert the other wireless devices in the geographic area, even those which are not within the range of the new wireless device, the new wireless device can broadcast an updated zone list to the wireless devices in the range list.

When a wireless device receives and updated zone list, or updates the zone list, the wireless device may be configured to broadcast the updated zone list to wireless devices in the range list associated with the wireless device.

For example, when the wireless device $502_2$ receives the updated zone list from the first wireless device, it may broadcast this updated zone list, which will be received by the wireless devices $502_4$ and $502_3$, within the range 5012. These wireless devices will also broadcast the updated zone list, which will then be received by the wireless device 502s due to the broadcast from wireless device $502_4$ over the range $501_4$.

In this way the updated zone list may be propagated through the geographic area by repeated broadcasts such that the updated zone list is received by all wireless devices in a geographical area.

It will be appreciated that in some circumstances it may not be possible for the zone list to be broadcast to every vehicle within a zone. For example, if wireless device $502_4$ were not present in the zone, then the wireless device 502s would not receive any broadcasted information, and would not be able to alert any other wireless devices that it has entered the zone 503. However, in this example, the wireless device 502s would not receive the un-validated messages either, as it is not within range of the broadcasts of the other wireless devices in the zone. Therefore, the wireless device $502_5$ would effectively not be connected to the other wireless devices in the zone.

The zone list for the example shown in Figure 5 may therefore be as follows:

| Vehicle ID | Weighting |
|---|---|
| A | 80 |
| B | 70 |
| C | 65 |
| D | 40 |
| E | 100 |

Returning to Figure 3, in step 302, the first wireless device selects an active list of one or more wireless devices from a plurality of wireless devices in the geographical area. As discussed previously with respect to Figures 4 and 5, the first wireless device may receive a zone list comprising a list of the plurality of wireless devices in the geographic area, and the respective weightings associated with the plurality of wireless devices.

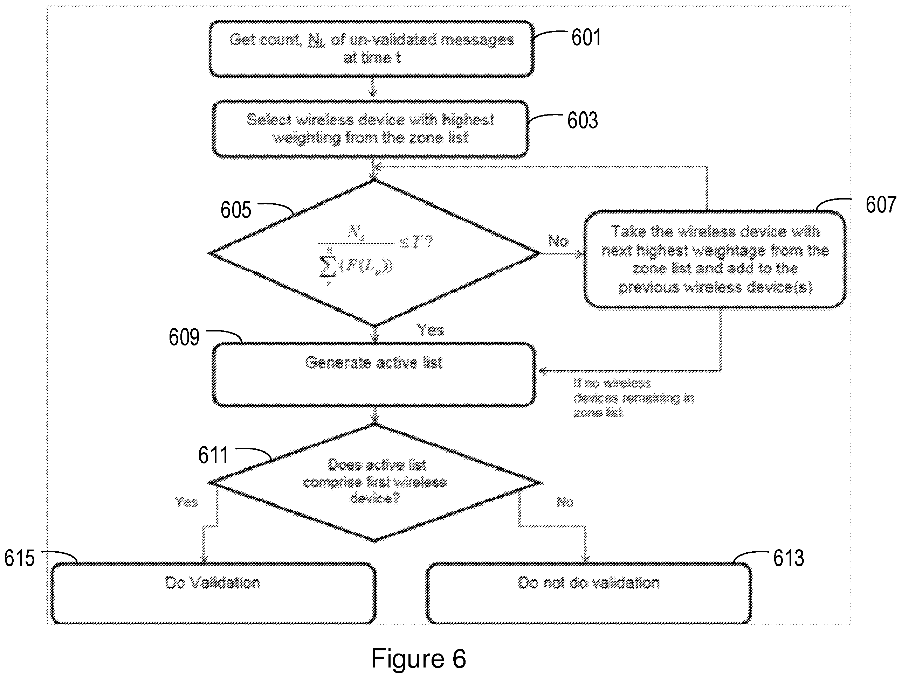

The wireless device may therefore select the active list of one or more wireless devices by selecting the one or more wireless devices from the zone list. For example, the first wireless device may select a first number of wireless devices from the zone list associated with the highest weightings such that a count of the pool of un-validated messages at a time, t, divided by a sum of the weightings associated with the first number of wireless devices, is less than or equal to a predetermined maximum time for validating an un-validated message, as will be described with more detail with respect to **Figure 6.**

Figure 6 illustrates a method of generating an active list of wireless devices for performing validation of the pool of un-validated messages.

In step 601, the first wireless device obtains a count, Nt, of the number of un-validated messages in the pool of un-validated messages at a time t. For example, the number of un-validated messages in the pool of un-validated messages at a time t may be, for example, 240 message.

In step 603, the first wireless device selects the wireless device with the highest weighting from the zone list. This may be the wireless device which is capable of validating the highest number of messages per unit time. The selection of a wireless device with the highest weighting from the zone list may be represented by $F(L_u)$. In the example of Figure 5, the first wireless device may therefore select wireless device E with weighting 100.

In step 605, the first wireless device determines whether the following inequality is true:

$$\frac{N_t}{\sum_{i}^{n}(F(L_u))} \leq T$$

, where T is a predetermined maximum time for validating an un-validated message. For example, for vehicle implementations, the predetermined maximum time for validating a message may be set at 1 second.

In the example of Figure 5 therefore, the inequality may be considered to not be satisfied as 240/100 is 2.4 seconds, which is greater than the predetermined maximum time for validating an un-validated message of 1 second.

The method therefore passes to step 607, in which the wireless device selects the wireless device with the next highest weighting from the zone list and adds this weighting to the previous weighting. In this example, the first wireless device may therefore select wireless device A having a weighting of 80

The method then returns to step 605 in which first wireless device determines whether the inequality is true now. The inequality in this example may still therefore not be satisfied as 240/(100+80) is 1.333, seconds which is greater than the predetermined maximum time of 1 second.

The first wireless device may therefore repeat this process of selecting a wireless device with the next highest weighting from the zone list until the inequality is satisfied, or until there are no more wireless devices in the zone list. In the example of Figure 5, the inequality may be considered satisfied when the wireless devices E, A and B have been selected from the zone list, as 240/(100+80+70) is 0.96 which satisfies the inequality requirement of less than or equal to 1.

The method then passes to step 609 in which the selected wireless devices, wireless devices E, A and B in this example, form the active list.

In step 611, the first wireless device determines whether or not the active list comprises the first wireless device. If the active list does not comprise the first wireless device, the first wireless device does not perform any validation of the un-validated messages in the pool of un-validated messages, in step 613.

However, responsive to the active list comprising the first wireless device, the first wireless device performs validation of one or more of the pool of un-validated messages in step 615.

In the example of Figure 5 therefore, the wireless devices A, B and E will perform validation of the 240 un-validated messages at time t. Each of the wireless devices in the active list may select a different number of the un-validated messages to validate. In some examples, a wireless device may select a number of un-validated messages proportional to their associated weighting. For example, wireless device E may select the first 100 un-validated messages, wireless device A may select the next 80 un-validated messages, and wireless device B may select the remaining 60 un-validated messages. This selection of un-validated messages may occur simultaneously, as each wireless device has knowledge of both the active list and the pool of un-validated messages.

It will be appreciated that the aforementioned algorithm may be performed repeatedly, periodically, or continuously, during operation of a wireless device. In this way a wireless device may be used or not used for validation depending on the capabilities of other wireless devices in the geographical area, and on the number of messages which are to be validated in the pool of un-validated messages.

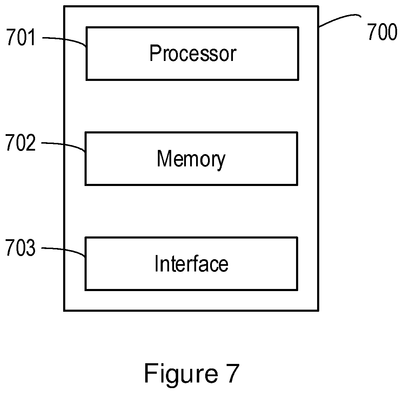

**Figure 7** illustrates a wireless device 700 according to some embodiments. The wireless device 700 comprises an interface 703, and a processor 701, wherein the processor 701 is operable to obtain respective weightings associated with each of the plurality of wireless devices; select an active list of one or more wireless devices from the plurality of wireless devices, based on the respective weightings associated with each of the plurality of wireless devices; and responsive to the active list comprising the first wireless device, perform validation of the one or more of the pool of un-validated messages. The wireless device 700 further comprise a memory 702.

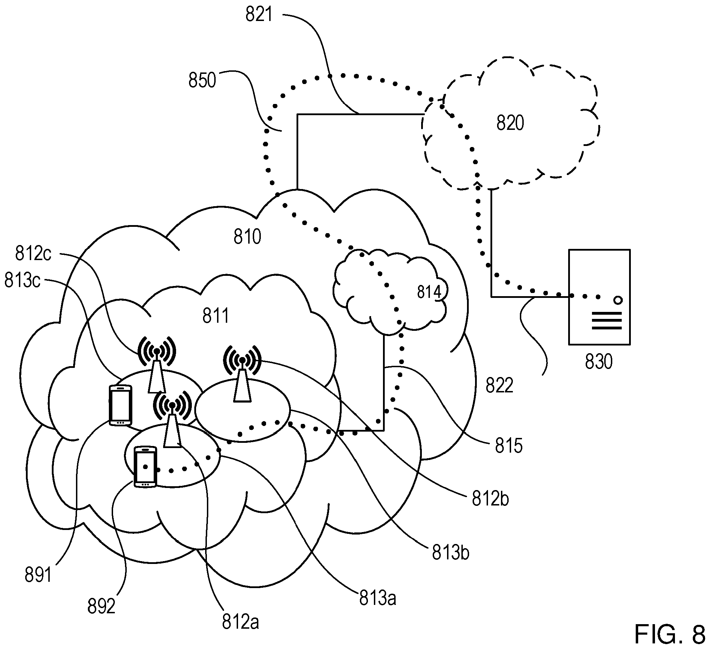

**Figure 8** illustrates a telecommunication network connected via an intermediate network to a host computer in accordance with some embodiments. With reference to FIGURE 8, in accordance with an embodiment, a communication system includes telecommunication network 810, such as a 3GPP-type cellular network, which comprises access network 811, such as a radio access network, and core network 814. Access network 811 comprises a plurality of base stations 812a, 812b, 812c, such as NBs, eNBs, gNBs or other types of wireless access points, each defining a corresponding coverage area 813a, 813b, 813c. Each base station 812a, 812b, 812c is connectable to core network 814 over a wired or wireless connection 815. A first UE 891 located in coverage area 813c is configured to wirelessly connect to, or be paged by, the corresponding base station 812c. A second UE 892 in coverage area 813a is wirelessly connectable to the corresponding base station 812a. The UEs 891 and 892 may be any of the wireless devices 502i illustrated in Figure 5. It will be appreciated that the wireless devices illustrated in Figure 5 may be connected to a network as illustrated in Figure 8. While a plurality of UEs 891, 892 are illustrated in this example, the disclosed embodiments are equally applicable to a situation where a sole UE is in the coverage area or where a sole UE is connecting to the corresponding base station 812.

Telecommunication network 810 is itself connected to host computer 830, which may be embodied in the hardware and/or software of a standalone server, a cloud-implemented server, a distributed server or as processing resources in a server farm. Host computer 830 may be under the ownership or control of a service provider, or may be operated by the service provider or on behalf of the service provider. Connections 821 and 822 between telecommunication network 810 and host computer 830 may extend directly from core network 814 to host computer 830 or may go via an optional intermediate network 820. Intermediate network 820 may be one of, or a combination of more than one of, a public, private or hosted network; intermediate network 820, if any, may be a backbone network or the Internet; in particular, intermediate network 820 may comprise two or more subnetworks (not shown).

The communication system of Figure 8 as a whole enables connectivity between the connected UEs 891, 892 and host computer 830. The connectivity may be described as an over-the-top (OTT) connection 850. Host computer 830 and the connected UEs 891, 892 are configured to communicate data and/or signaling via OTT connection 850, using access network 811, core network 814, any intermediate network 820 and possible further infrastructure (not shown) as intermediaries. OTT connection 850 may be transparent in the sense that the participating communication devices through which OTT connection 850 passes are unaware of routing of uplink and downlink communications. For example, base station 812 may not or need not be informed about the past routing of an incoming downlink communication with data originating from host computer 830 to be forwarded (e.g., handed over) to a connected UE 891. Similarly, base station 812 need not be aware of the future routing of an outgoing uplink communication originating from the UE 891 towards the host computer 830.

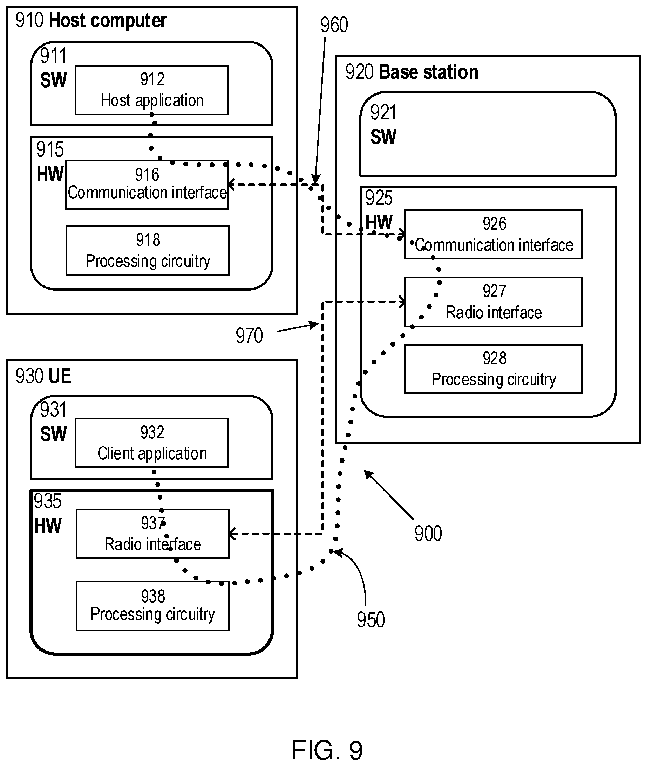

**Figure 9** illustrates a host computer communicating via a base station with a user equipment over a partially wireless connection in accordance with some embodiments. Example implementations, in accordance with an embodiment, of the UE, base station and host computer discussed in the preceding paragraphs will now be described with reference to Figure 9. In communication system 900, host computer 910 comprises hardware 915 including communication interface 916 configured to set up and maintain a wired or wireless connection with an interface of a different communication device of communication system 900. Host computer 910 further comprises processing circuitry 918, which may have storage and/or processing capabilities. In particular, processing circuitry 918 may comprise one or more programmable processors, application-specific integrated circuits, field programmable gate arrays or combinations of these (not shown) adapted to execute instructions. Host computer 910 further comprises software 911, which is stored in or accessible by host computer 910 and executable by processing circuitry 918. Software 911 includes host application 912. Host application 912 may be operable to provide a service to a remote user, such as UE 930 connecting via OTT connection 950 terminating at UE 930 and host computer 910. In providing the service to the remote user, host application 912 may provide user data which is transmitted using OTT connection 950.

Communication system 900 further includes base station 920 provided in a telecommunication system and comprising hardware 925 enabling it to communicate with host computer 910 and with UE 930. Hardware 925 may include communication interface 926 for setting up and maintaining a wired or wireless connection with an interface of a different communication device of communication system 900, as well as radio interface 927 for setting up and maintaining at least wireless connection 970 with UE 930 located in a coverage area (not shown in Figure 9) served by base station 920. The UE 930 may be any one of the wireless devices 502i illustrated in Figure 5. Communication interface 926 may be configured to facilitate connection 960 to host computer 910. Connection 960 may be direct or it may pass through a core network (not shown in Figure 9) of the telecommunication system and/or through one or more intermediate networks outside the telecommunication system. In the embodiment shown, hardware 925 of base station 920 further includes processing circuitry 928, which may comprise one or more programmable processors, application-specific integrated circuits, field programmable gate arrays or combinations of these (not shown) adapted to execute instructions. Base station 920 further has software 921 stored internally or accessible via an external connection.

Communication system 900 further includes UE 930 already referred to. Its hardware 935 may include radio interface 937 configured to set up and maintain wireless connection 970 with a base station serving a coverage area in which UE 930 is currently located. Hardware 935 of UE 930 further includes processing circuitry 938, which may comprise one or more programmable processors, application-specific integrated circuits, field programmable gate arrays or combinations of these (not shown) adapted to execute instructions. UE 930 further comprises software 931, which is stored in or accessible by UE 930 and executable by processing circuitry 938. Software 931 includes client application 932. Client application 932 may be operable to provide a service to a human or non-human user via UE 930, with the support of host computer 910. In host computer 910, an executing host application 912 may communicate with the executing client application 932 via OTT connection 950 terminating at UE 930 and host computer 910. In providing the service to the user, client application 932 may receive request data from host application 912 and provide user data in response to the request data. OTT connection 950 may transfer both the request data and the user data.

Client application 932 may interact with the user to generate the user data that it provides.

It is noted that host computer 910, base station 920 and UE 930 illustrated in Figure 9 may be similar or identical to host computer 830, one of base stations 812a, 812b, 812c and one of UEs 891, 892 of Figure 8, respectively. This is to say, the inner workings of these entities may be as shown in Figure 9 and independently, the surrounding network topology may be that of Figure 8.

In Figure 9, OTT connection 950 has been drawn abstractly to illustrate the communication between host computer 910 and UE 930 via base station 920, without explicit reference to any intermediary devices and the precise routing of messages via these devices. Network infrastructure may determine the routing, which it may be configured to hide from UE 930 or from the service provider operating host computer 910, or both. While OTT connection 950 is active, the network infrastructure may further take decisions by which it dynamically changes the routing (e.g., on the basis of load balancing consideration or reconfiguration of the network).

Wireless connection 970 between UE 930 and base station 920 is in accordance with the teachings of the embodiments described throughout this disclosure. One or more of the various embodiments improve the performance of OTT services provided to UE 930 using OTT connection 950, in which wireless connection 970 forms the last segment. More precisely, the teachings of these embodiments may improve the validation process of messages transmitted between the wireless devices or UEs in the network and thereby provide benefits such as reducing the likelihood of fatal incidents.

A measurement procedure may be provided for the purpose of monitoring data rate, latency and other factors on which the one or more embodiments improve. There may further be an optional network functionality for reconfiguring OTT connection 950 between host computer 910 and UE 930, in response to variations in the measurement results. The measurement procedure and/or the network functionality for reconfiguring OTT connection 950 may be implemented in software 911 and hardware 915 of host computer 910 or in software 931 and hardware 935 of UE 930, or both. In embodiments, sensors (not shown) may be deployed in or in association with communication devices through which OTT connection 950 passes; the sensors may participate in the measurement procedure by supplying values of the monitored quantities exemplified above, or supplying values of other physical quantities from which software 911, 931 may compute or estimate the monitored quantities. The reconfiguring of OTT connection 950 may include message format, retransmission settings, preferred routing etc.; the reconfiguring need not affect base station 920, and it may be unknown or imperceptible to base station 920. Such procedures and functionalities may be known and practiced in the art. In certain embodiments, measurements may involve proprietary UE signaling facilitating host computer 910's measurements of throughput, propagation times, latency and the like. The measurements may be implemented in that software 911 and 931 causes messages to be transmitted, in particular empty or 'dummy' messages, using OTT connection 950 while it monitors propagation times, errors etc.

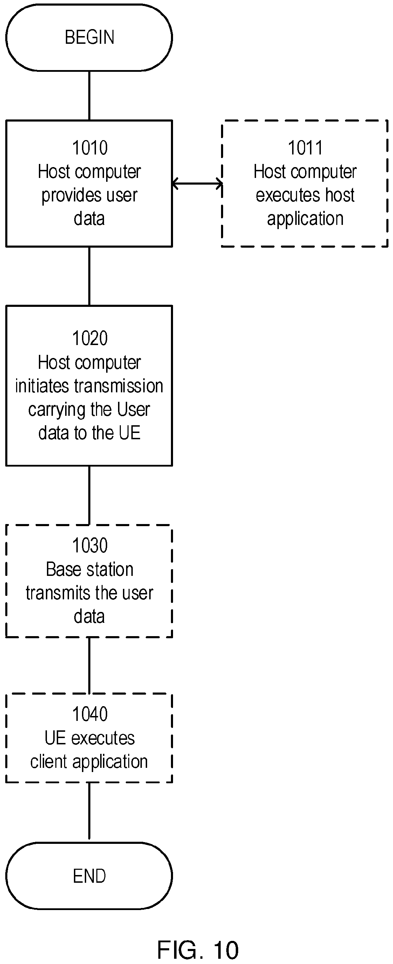

**Figure 10** illustrates methods implemented in a communication system including a host computer, a base station and a user equipment in accordance with some embodiments. Figure 10 is a flowchart illustrating a method implemented in a communication system, in accordance with one embodiment. The communication system includes a host computer, a base station and a UE which may be those described with reference to Figures 8 and 9. For simplicity of the present disclosure, only drawing references to Figure 10 will be included in this section. In step 1010, the host computer provides user data. In substep 1011 (which may be optional) of step 1010, the host computer provides the user data by executing a host application. In step 1020, the host computer initiates a transmission carrying the user data to the UE. In step 1030 (which may be optional), the base station transmits to the UE the user data which was carried in the transmission that the host computer initiated, in accordance with the teachings of the embodiments described throughout this disclosure. In step 1040 (which may also be optional), the UE executes a client application associated with the host application executed by the host computer.

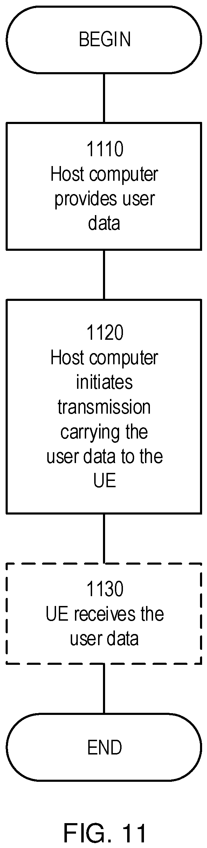

**Figure 11** illustrates methods implemented in a communication system including a host computer, a base station and a user equipment in accordance with some embodiments. Figure 11 is a flowchart illustrating a method implemented in a communication system, in accordance with one embodiment. The communication system includes a host computer, a base station and a UE which may be those described with reference to Figures 8 and 9. For simplicity of the present disclosure, only drawing references to Figure 11 will be included in this section. In step 1110 of the method, the host computer provides user data. In an optional substep (not shown) the host computer provides the user data by executing a host application. In step 1120, the host computer initiates a transmission carrying the user data to the UE. The transmission may pass via the base station, in accordance with the teachings of the embodiments described throughout this disclosure. In step 1130 (which may be optional), the UE receives the user data carried in the transmission.

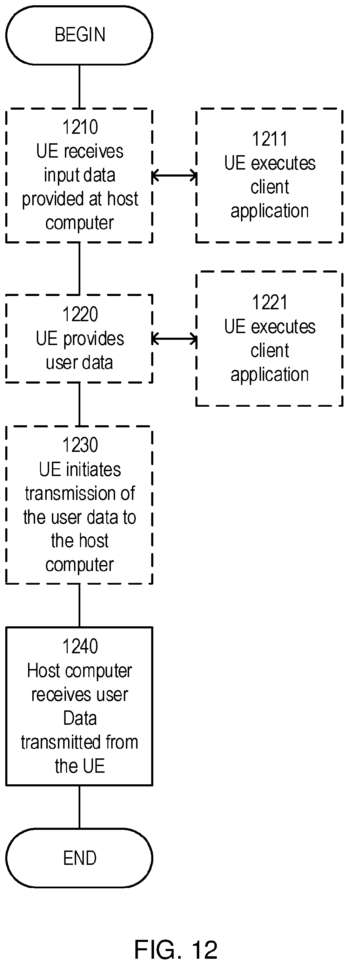

**Figure 12** illustrates methods implemented in a communication system including a host computer, a base station and a user equipment in accordance with some embodiments. Figure 12 is a flowchart illustrating a method implemented in a communication system, in accordance with one embodiment. The communication system includes a host computer, a base station and a UE which may be those described with reference to Figures 8 and 9. For simplicity of the present disclosure, only drawing references to Figure 12 will be included in this section. In step 1210 (which may be optional), the UE receives input data provided by the host computer. Additionally or alternatively, in step 1220, the UE provides user data. In substep 1221 (which may be optional) of step 1220, the UE provides the user data by executing a client application. In substep 1211 (which may be optional) of step 1210, the UE executes a client application which provides the user data in reaction to the received input data provided by the host computer. In providing the user data, the executed client application may further consider user input received from the user. Regardless of the specific manner in which the user data was provided, the UE initiates, in substep 1230 (which may be optional), transmission of the user data to the host computer. In step 1240 of the method, the host computer receives the user data transmitted from the UE, in accordance with the teachings of the embodiments described throughout this disclosure.

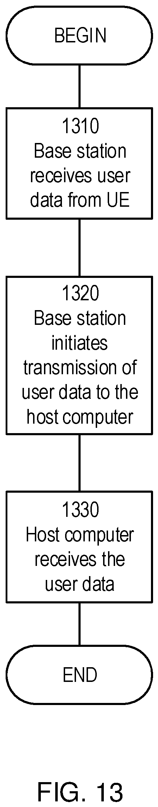

**Figure 13** illustrates methods implemented in a communication system including a host computer, a base station and a user equipment in accordance with some embodiments. Figure 13 is a flowchart illustrating a method implemented in a communication system, in accordance with one embodiment. The communication system includes a host computer, a base station and a UE which may be those described with reference to Figures 8 and 9. For simplicity of the present disclosure, only drawing references to Figure 13 will be included in this section. In step 1310 (which may be optional), in accordance with the teachings of the embodiments described throughout this disclosure, the base station receives user data from the UE. In step 1320 (which may be optional), the base station initiates transmission of the received user data to the host computer. In step 1330 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

There is therefore provided methods and apparatus for determining whether or not a wireless device in a geographical area should perform validation of one or more of a pool of un-validated messages addressed to wireless devices in the geographical area. This selection of which wireless devices should perform validation reduces delays caused by slow validation processes, and therefore reduces the likelihood of incidents being caused by slow validation of messages to be transmitted to wireless devices.

**Claims**

1. A method in a first wireless device (502i, 700), which is one of a plurality of wireless devices (502i) located in a geographical area (503) associated with a wireless communications network, for determining whether to perform validation of one or more of a pool of un-validated messages, each addressed to one of the plurality of wireless devices; the method comprising:

   obtaining (301) respective weightings associated with each of the plurality of wireless devices, wherein a weighting, associated with a wireless device, is representative of a number of un-validated messages the wireless device is able to validate in a unit of time;
   obtaining a zone list wherein the zone list comprises a list of the plurality of wireless devices and the respective weightings associated with the plurality of wireless devices;
   selecting (303) an active list of one or more wireless devices from the plurality of wireless devices by selecting a first number of wireless devices from the zone list associated with the highest weightings such that a count of the pool of un-validated messages at a time, t, divided by a sum of the weightings associated with the first number of wireless devices, is less than or equal to a predetermined maximum time for validating an un-validated message; and
   responsive to the active list comprising the first wireless device, performing (305) validation of the one or more of the pool of un-validated messages.

2. The method as claimed in claim 1, wherein the step of obtaining the zone list comprises:

   generating a range list, wherein the range list comprises a list of one or more wireless devices, comprising the first wireless device, located within a radius of the first wireless device, and respective weightings associated with each of the one or more wireless devices, wherein the one or more wireless devices are within the geographical area;
   receiving the zone list from each of the one or more wireless devices in the range list; and
   updating the zone list with any information in the range list which is not already in the zone list.

3. The method as claimed in claim 2, further comprising, responsive to the range list changing, updating the zone list.

4. The method as claimed in claim 3, further comprising broadcasting the updated zone list to the one or more wireless devices in the range list.

5. The method as claimed in any preceding claim wherein, the step of obtaining respective weightings associated with the each of the plurality of wireless devices comprises:
   obtaining a first weighting associated with the first wireless device.

6. The method as claimed in claim 5, wherein the first weighting comprises a first component of the first weighting calculated based on static parameters associated with the first wireless device.

7. The method as claimed in claim 6, wherein the static parameters comprise one or more of: a computation power of the first wireless device, a hardware capacity of the first wireless device, and a payment status of the first wireless device with the mobile operator.

8. The method as claimed in any one of claims 5 to 7, wherein the first weighting comprises a second component of the first weighting calculated based on non-static parameters associated with the first wireless device.

9. The method as claimed in claim 8 wherein, the non-static parameters comprise one or more of: a battery level of the first wireless device, a fuel level of the first wireless device, a signal strength of the first wireless device, a bandwidth of the first wireless device, an engine temperature of the first wireless device; and a speed at which the first wireless device is travelling.

10. The method as claimed in any one of claims 8 to 9 wherein the second component of the first weighting is calculated by:

    assigning a factor adjustment to each non-static parameter; and
    combining the non-static parameters with the factor adjustments.

**11.** The method as claimed in any preceding claim wherein the first wireless device comprises a vehicle device.

**12.** A first wireless device (502i, 700), which is one of a plurality of wireless devices (502i) located in a geographical area (503) associated with a wireless communications network, for determining whether to perform validation of one or more of a pool of un-validated messages, each addressed to one of the plurality of wireless devices, the wireless device comprising:

an interface (703); and
a processor (701), wherein the processor is operable to:

obtain respective weightings associated with each of the plurality of wireless devices, wherein a weighting, associated with a wireless device, is representative of a number of un-validated messages the wireless device is able to validate in a unit of time;
obtain a zone list wherein the zone list comprises a list of the plurality of wireless devices and the respective weightings associated with the plurality of wireless devices;
select an active list of one or more wireless devices from the plurality of wireless devices wherein the processor is further operable to select a first number of wireless devices from the zone list associated with the highest weightings such that a count of the pool of un-validated messages at a time, t, divided by a sum of the weightings associated with the first number of wireless devices, is less than or equal to a predetermined maximum time for validating an un-validated message;
responsive to the active list comprising the first wireless device, perform validation of the one or more of the pool of un-validated messages.

**13.** The first wireless device as claimed in claim 12, wherein the processor is further operable to carry out a method according to any one of claims 2 to 11.

**Patentansprüche**

**1.** Verfahren in einer ersten drahtlosen Vorrichtung (502$_1$, 700), die eine von einer Vielzahl von drahtlosen Vorrichtungen (502$_i$) ist, die sich in einem geografischen Gebiet (503) befinden, das einem drahtlosen Kommunikationsnetz zugeordnet ist, zum Bestimmen, ob eine Validierung einer oder mehrerer aus einem Pool nicht validierter Nachrichten, die jeweils an eine der Vielzahl von drahtlosen Vorrichtungen adressiert sind, durchgeführt werden soll; wobei das Verfahren umfasst:

Erhalten (301) von jeweiligen Gewichtungen, die jeder der Vielzahl von drahtlosen Vorrichtungen zugeordnet sind, wobei eine Gewichtung, die einer drahtlosen Vorrichtung zugeordnet ist, für eine Anzahl von nicht validierten Nachrichten, die die drahtlose Vorrichtung in einer Zeiteinheit validieren kann, repräsentativ ist;
Erhalten einer Zonenliste, wobei die Zonenliste eine Liste der Vielzahl von drahtlosen Vorrichtungen und die jeweiligen Gewichtungen, die der Vielzahl von drahtlosen Vorrichtungen zugeordnet sind, umfasst;
Auswählen (303) einer aktiven Liste von einer oder mehreren drahtlosen Vorrichtungen aus der Vielzahl von drahtlosen Vorrichtungen durch Auswählen einer ersten Anzahl von drahtlosen Vorrichtungen aus der Zonenliste, die den höchsten Gewichtungen zugeordnet ist, sodass eine Zählung des Pools nicht validierter Nachrichten zu einem Zeitpunkt t dividiert durch eine Summe der Gewichtungen, die der ersten Anzahl von drahtlosen Vorrichtungen zugeordnet sind, kleiner oder gleich einer vorbestimmten maximalen Zeit zum Validieren einer nicht validierten Nachricht ist; und
als Reaktion darauf, dass die aktive Liste die erste drahtlose Vorrichtung umfasst, Durchführen (305) einer Validierung der einen oder der mehreren aus dem Pool nicht validierter Nachrichten.

**2.** Verfahren nach Anspruch 1, wobei der Schritt des Erhaltens der Zonenliste umfasst:

Erzeugen einer Bereichsliste, wobei die Bereichsliste eine Liste von einer oder mehreren drahtlosen Vorrichtungen umfasst, umfassend die erste drahtlose Vorrichtung, die sich innerhalb eines Radius der ersten drahtlosen Vorrichtung befindet, und jeweilige Gewichtungen, die jeder der einen oder der mehreren drahtlosen Vorrichtungen zugeordnet sind, wobei die eine oder die mehreren drahtlosen Vorrichtungen innerhalb des geografischen Gebiets sind;
Empfangen der Zonenliste von jeder der einen oder der mehreren drahtlosen Vorrichtungen in der Bereichsliste und
Aktualisieren der Zonenliste mit beliebigen Informationen in der Bereichsliste, die sich nicht bereits in der Zonenliste befinden.

**3.** Verfahren nach Anspruch 2, ferner umfassend, als Reaktion darauf, dass sich die Bereichsliste ändert, ein Aktualisieren der Zonenliste.

**4.** Verfahren nach Anspruch 3, ferner umfassend ein Rundsenden der aktualisierten Zonenliste an die eine oder die mehreren drahtlosen Vorrichtungen in der Bereichsliste.

**5.** Verfahren nach einem der vorstehenden Ansprüche, wobei der Schritt des Erhaltens von jeweiligen Gewichtungen, die jeder der Vielzahl von drahtlosen Vorrichtungen zugeordnet sind, umfasst: Erhalten einer ersten Gewichtung, die der ersten drahtlosen Vorrichtung zugeordnet ist.

**6.** Verfahren nach Anspruch 5, wobei die erste Gewichtung eine erste Komponente der ersten Gewichtung umfasst, die basierend auf statischen Parametern, die der ersten drahtlosen Vorrichtung zugeordnet sind, berechnet wird.

**7.** Verfahren nach Anspruch 6, wobei die statischen Parameter eines oder mehrere umfassen von: einer Rechenleistung der ersten drahtlosen Vorrichtung, einer Hardwarekapazität der ersten drahtlosen Vorrichtung und einem Zahlungsstatus der ersten drahtlosen Vorrichtung beim Mobilfunkbetreiber.

**8.** Verfahren nach einem der Ansprüche 5 bis 7, wobei die erste Gewichtung eine zweite Komponente der ersten Gewichtung umfasst, die basierend auf nichtstatischen Parametern, die der ersten drahtlosen Vorrichtung zugeordnet sind, berechnet wird.

**9.** Verfahren nach Anspruch 8, wobei die nichtstatischen Parameter eines oder mehrere umfassen von: einem Batteriestand der ersten drahtlosen Vorrichtung, einem Kraftstoffstand der ersten drahtlosen Vorrichtung, einer Signalstärke der ersten drahtlosen Vorrichtung, einer Bandbreite der ersten drahtlosen Vorrichtung, einer Motortemperatur der ersten drahtlosen Vorrichtung und einer Geschwindigkeit, mit der sich die erste drahtlose Vorrichtung bewegt.

**10.** Verfahren nach einem der Ansprüche 8 bis 9, wobei die zweite Komponente der ersten Gewichtung berechnet wird durch:

Zuweisen einer Faktoranpassung zu jedem nichtstatischen Parameter und Kombinieren der nichtstatischen Parameter mit den Faktoranpassungen.

**11.** Verfahren nach einem der vorstehenden Ansprüche, wobei die erste drahtlose Vorrichtung eine Fahrzeugvorrichtung umfasst.

**12.** Erste drahtlose Vorrichtung ($502_1$, 700), die eine von einer Vielzahl von drahtlosen Vorrichtungen ($502_i$)

ist, die sich in einem geografischen Gebiet (503) befinden, das einem drahtlosen Kommunikationsnetz zugeordnet ist, zum Bestimmen, ob eine Validierung einer oder mehrerer aus einem Pool nicht validierter Nachrichten, die jeweils an eine der Vielzahl von drahtlosen Vorrichtungen adressiert sind, durchgeführt werden soll, die drahtlose Vorrichtung umfassend:

eine Schnittstelle (703) und
einen Prozessor (701), wobei der Prozessor betreibbar ist zum:

Erhalten von jeweiligen Gewichtungen, die jeder der Vielzahl von drahtlosen Vorrichtungen zugeordnet sind, wobei eine Gewichtung, die einer drahtlosen Vorrichtung zugeordnet ist, für eine Anzahl von nicht validierten Nachrichten, die die drahtlose Vorrichtung in einer Zeiteinheit validieren kann, repräsentativ ist;
Erhalten einer Zonenliste, wobei die Zonenliste eine Liste der Vielzahl von drahtlosen Vorrichtungen und die jeweiligen Gewichtungen, die der Vielzahl von drahtlosen Vorrichtungen zugeordnet sind, umfasst;
Auswählen einer aktiven Liste von einer oder mehreren drahtlosen Vorrichtungen aus der Vielzahl von drahtlosen Vorrichtungen, wobei der Prozessor ferner zum Auswählen einer ersten Anzahl von drahtlosen Vorrichtungen aus der Zonenliste, die den höchsten Gewichtungen zugeordnet ist, sodass eine Zählung des Pools nicht validierter Nachrichten zu einem Zeitpunkt t dividiert durch eine Summe der Gewichtungen, die der ersten Anzahl von drahtlosen Vorrichtungen zugeordnet sind, kleiner oder gleich einer vorbestimmten maximalen Zeit zum Validieren einer nicht validierten Nachricht ist, betreibbar ist;
als Reaktion darauf, dass die aktive Liste die erste drahtlose Vorrichtung umfasst, Durchführen einer Validierung der einen oder der mehreren aus dem Pool nicht validierter Nachrichten.

**13.** Erste drahtlose Vorrichtung nach Anspruch 12, wobei der Prozessor ferner zum Ausführen eines Verfahrens nach einem der Ansprüche 2 bis 11 betreibbar ist.

## Revendications

**1.** Procédé dans un premier dispositif sans fil ($502_1$, 700), qui est un parmi une pluralité de dispositifs sans fil ($502_i$) situés dans une zone géographique (503) associée à un réseau de communications sans fil, pour déterminer s'il faut mettre en œuvre une validation d'un ou plusieurs parmi un ensemble de messages non validés, adressés chacun à un parmi la pluralité de dispositifs sans fil ; le procédé comprenant :

l'obtention (301) de pondérations respectives associées à chacun parmi la pluralité de dispositifs sans fil, dans lequel une pondération, associée à un dispositif sans fil, est représentative d'un nombre de messages non validés que le dispositif sans fil est capable de valider dans une unité de temps ;

l'obtention d'une liste de zones dans lequel la liste de zones comprend une liste de la pluralité de dispositifs sans fil et des pondérations respectives associées à la pluralité de dispositifs sans fil ;

la sélection (303) d'une liste active d'un ou plusieurs dispositifs sans fil parmi la pluralité de dispositifs sans fil en sélectionnant un premier nombre de dispositifs sans fil dans la liste de zones associée aux pondérations les plus élevées de sorte qu'un comptage de l'ensemble de messages non validés à un temps, t, divisé par une somme des pondérations associées au premier nombre de dispositifs sans fil, est inférieur ou égal à un temps maximal prédéterminé pour valider un message non validé ; et

en réponse à la liste active comprenant le premier dispositif sans fil, la mise en œuvre (305) d'une validation de celui ou de ceux parmi l'ensemble de messages non validés.

2. Procédé tel que revendiqué dans la revendication 1, dans lequel l'étape d'obtention de la liste de zones comprend :

la génération d'une liste de plages, dans lequel la liste de plages comprend une liste d'un ou plusieurs dispositifs sans fil, comprenant le premier dispositif sans fil, situés au sein d'un rayon du premier dispositif sans fil, et les pondérations respectives associées à chacun parmi le ou les dispositifs sans fil, dans lequel le ou les dispositifs sans fil se trouvent dans la zone géographique ;

la réception de la liste de zones depuis chacun parmi le ou les dispositifs sans fil dans la liste de plages ; et

la mise à jour de la liste de zones avec n'importe quelles informations dans la liste de plages qui ne sont pas déjà dans la liste de zones.

3. Procédé tel que revendiqué dans la revendication 2, comprenant en outre, en réponse à la liste de plages qui change, la mise à jour de la liste de zones.

4. Procédé tel que revendiqué dans la revendication 3, comprenant en outre la diffusion de la liste de zones mise à jour au ou aux dispositifs sans fil dans la liste de plages.

5. Procédé tel que revendiqué dans l'une quelconque revendication précédente dans lequel, l'étape d'obtention de pondérations respectives associées à chacun parmi la pluralité de dispositifs sans fil comprend :
l'obtention d'une première pondération associée au premier dispositif sans fil.

6. Procédé tel que revendiqué dans la revendication 5, dans lequel la première pondération comprend une première composante de la première pondération calculée sur la base de paramètres statiques associés au premier dispositif sans fil.

7. Procédé tel que revendiqué dans la revendication 6, dans lequel les paramètres statiques comprennent un ou plusieurs parmi : une puissance de calcul du premier dispositif sans fil, une capacité matérielle du premier dispositif sans fil, et un statut de paiement du premier dispositif sans fil avec l'opérateur mobile.

8. Procédé tel que revendiqué dans l'une quelconque des revendications 5 à 7, dans lequel la première pondération comprend une deuxième composante de la première pondération calculée sur la base de paramètres non statiques associés au premier dispositif sans fil.

9. Procédé tel que revendiqué dans la revendication 8 dans lequel, les paramètres non statiques comprennent un ou plusieurs parmi : un niveau de batterie du premier dispositif sans fil, un niveau de carburant du premier dispositif sans fil, une force de signal du premier dispositif sans fil, une largeur de bande du premier dispositif sans fil, une température de moteur du premier dispositif sans fil ; et une vitesse à laquelle le premier dispositif sans fil se déplace.

10. Procédé tel que revendiqué dans l'une quelconque des revendications 8 à 9 dans lequel la deuxième composante de la première pondération est calculée par :

l'attribution d'un ajustement de facteur à chaque paramètre non statique ; et
la combinaison des paramètres non statiques avec les ajustements de facteur.

11. Procédé tel que revendiqué dans l'une quelconque revendication précédente dans lequel le premier dispositif sans fil comprend un dispositif de véhicule.

12. Premier dispositif sans fil ($502_1$, 700), qui est un parmi une pluralité de dispositifs sans fil (502ᵢ) situés dans une zone géographique (503) associée à un réseau de communications sans fil, pour déterminer s'il faut mettre en œuvre une validation d'un ou plusieurs parmi un ensemble de messages non validés, adressés chacun à un parmi la pluralité de dispositifs sans fil, le dispositif sans fil comprenant :

une interface (703) ; et
un processeur (701), dans lequel le processeur est fonctionnel pour :

obtenir des pondérations respectives associées à chacun parmi la pluralité de dispositifs sans fil, dans lequel une pondération, associée à un dispositif sans fil, est représentative d'un nombre de messages non validés que le dispositif sans fil est capable de valider dans une unité de temps ;
obtenir une liste de zones dans lequel la liste de zones comprend une liste de la pluralité de dispositifs sans fil et des pondérations respectives associées à la pluralité de dispositifs sans fil ;
sélectionner une liste active d'un ou plusieurs dispositifs sans fil parmi la pluralité de dispositifs sans fil dans lequel le processeur est en outre fonctionnel pour sélectionner un premier nombre de dispositifs sans fil dans la liste de zones associée aux pondérations les plus élevées de sorte qu'un comptage de l'ensemble de messages non validés à un temps, t, divisé par une somme des pondérations associées au premier nombre de dispositifs sans fil, est inférieur ou égal à un temps maximal prédéterminé pour valider un message non validé ;
en réponse à la liste active comprenant le premier dispositif sans fil, mettre en œuvre une validation de celui ou de ceux parmi l'ensemble de messages non validés.

13. Premier dispositif sans fil tel que revendiqué dans la revendication 12, dans lequel le processeur est en outre fonctionnel pour effectuer un procédé selon l'une quelconque des revendications 2 à 11.

Figure 1

Figure 2

Obtain a respective
weighting associated with
each of the plurality of
wireless devices — 301

Select an active list of one
or more wireless devices
from plurality of wireless
devices in geographical
area — 303

Responsive to the active list
comprising the first wireless
device, perform validation
of the one or more of the
pool of un-validated
messages — 305

Figure 3

Figure 4

Figure 5

EP 3 725 110 B1

Figure 6

EP 3 725 110 B1

701 — Processor

700

702 — Memory

703 — Interface

Figure 7

FIG. 8

**910 Host computer**

911
**SW**

912
Host application

915
**HW**

916
Communication interface

918
Processing circuitry

960

**920 Base station**

921
**SW**

925
**HW**

926
Communication interface

927
Radio interface

928
Processing circuitry

970

900

**930 UE**

931
**SW**

932
Client application

935
**HW**

937
Radio interface

938
Processing circuitry

950

FIG. 9

BEGIN

**1010**
Host computer provides user data

**1011**
Host computer executes host application

**1020**
Host computer initiates transmission carrying the User data to the UE

**1030**
Base station transmits the user data

**1040**
UE executes client application

END

FIG. 10

BEGIN

1110
Host computer
provides user
data

1120
Host computer
initiates
transmission
carrying the
user data to the
UE

1130
UE receives the
user data

END

FIG. 11

BEGIN

1210
UE receives
input data
provided at host
computer

1211
UE executes
client
application

1220
UE provides
user data

1221
UE executes
client
application

1230
UE initiates
transmission of
the user data to
the host
computer

1240
Host computer
receives user
Data
transmitted from
the UE

END

FIG. 12

BEGIN

1310
Base station
receives user
data from UE

1320
Base station
initiates
transmission of
user data to the
host computer

1330
Host computer
receives the
user data

END

FIG. 13

**EP 3 725 110 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017190795 A1

- US 2009254754 A1